# EUROPÄISCHE PATENTSCHRIFT

(11) **EP 0 505 705 B1**
(45) Veröffentlichungstag und Bekanntmachung des Hinweises auf die Patenterteilung: **24.05.1995**
(21) Anmeldenummer: 92102130.9
(22) Anmeldetag: 08.02.1992
(51) Int. Cl.: B60G 13/18, F16F 9/53

(54) **Schwingungsdämpfendes Abstützbein für eine Kraftfahrzeug**
Vibration-damping support leg for a motor vehicle
Jambe de soutien pour véhicule automobile à amortissement de vibrations

(30) Priorität: 23.03.1991 DE 4109608
(43) Veröffentlichungstag der Anmeldung: 30.09.1992
(73) Patentinhaber: Dr.Ing.h.c. F. Porsche Aktiengesellschaft, 70435 Stuttgart (DE)
(72) Erfinder: Bayer, Heinz, Dipl.-Ing. (FH), W-7900 Ulm (DE)

(56) Entgegenhaltungen:
- EP-A- 0 229 902
- DE-A- 2 237 058
- GB-A- 1 057 455

## Beschreibung

Die Erfindung bezieht sich auf ein schwingungsdämpfendes Abstützbein für ein Kraftfahrzeug nach dem Oberbegriff des Anspruch 1.

Es sind bei Fahrzeugen Dämpferbeine bekannt, die zur Betilgung von Torsionseigenfrequenzen des Fahrzeugaufbaus eine Tilgermasse auf der Kolbenstange im Bereich seiner Abstützung am Fahrzeugaufbau aufweisen. Diese Anordnung ist aufgrund des benötigten Raumes in diesem Bereich problematisch und desweiteren ist eine derartig angeordnete Tilgermasse äußeren Einflüssen ausgesetzt. Aus der EP-A-0 229 902 ist ein schwingungsdämpfendes Abstützbein für ein Kraftfahrzeug zur Betilgung von Eigenfrequenzen des Fahrzeugaufbaus bekannt. Das Abstützbein umfasst eine hohle Kolbenstange, in dem eine axial bewegbare Tilgermasse angeordnet ist. Sie stützt sich an in endseitigen Hohlräumen vorgesehenen Federn ab, welche mit einem Medium gefüllt sind. Die Hohlräume sind über einen Durchlaß in der Tilgermasse miteinander verbunden. Die Hohlräume weisen nach der DE-A 2 237 058 einen oberen und unteren dichten Abschluß auf, der als Abstützung für die Federn dient. Beide bekannten Ansführungen stellen den nächstliegenden Stand der Technik dar.

Aufgabe der Erfindung ist es, ein Abstützbein für ein Kraftfahrzeug in der Weise auszubilden, daß bei Vermeidung eines zusätzlichen Raumanspruchs eine wirksame Betilgung von Torsionseigenfrequenzen des Fahrzeugaufbaus gewährleistet ist.

Diese Aufgabe wird erfindungsgemäß durch die kennzeichnenden Merkmale des Anspruchs 1 gelöst. Weitere vorteilhafte Merkmale beinhalten die Unteransprüche.

Durch diese erfindungsgemäße Gestaltung des Abstützbeines mit einer innerhalb der Kolbenstange axial bewegbaren Tilgermasse, die über ein flüssiges oder gasförmiges Medium bedämpfbar ist, kann einerseits eine gezielte Betilgung der Torsionseigenfrequenzen der Fahrzeugkarosserie bewirkt werden, wobei gleichzeitig eine kompakte innenliegende, vor äußeren Einflüssen geschützte Einheit geschaffen wird.

Die Tilgermasse ist endseitig jeweils über Federelemente, wie z.B. Spiralfedern, axial verschiebbar abgestützt und in einer Ruheposition gehalten. Durch eine Füllung der die Federelemente aufnehmenden Freiräume mit dem flüssigen oder gasförmigen Medium wird eine Bedämpfung der Tilgermasse erzielt. Nach einer weiteren vorteilhaften Ausführungsform kann das Medium auch aus einer elektroviskosen Flüssigkeit bestehen, die über eine angelegte Spannung einstellbar ist und somit die Schwingungsbandbreite variierbar wird.

Die Tilgermasse weist einen Durchlaß, z.B. eine Längsbohrung, auf, die die beiden Freiräume im Hohlraum der Kolbenstange miteinander verbindet, wodurch die in diesen Räumen vorhandene Flüssigkeit bei einer axialen Bewegung der Tilgermasse von einem zum anderen Raum fließen kann.

Die Lagerung der Tilgermasse in der hohlen Kolbenstange ist in der Weise ausgeführt, daß eine gleiche Frequenz wie die Torsionseigenfrequenz des Fahrzeugaufbaus erzielt wird und somit eine wirksame Schwingungsabsenkung des Aufbaus erreicht werden kann. Insbesondere kommt der Tilgereffekt auf die Torsionseigenfrequenz der Karosserie dadurch zustande, daß eine zusätzliche Betilgung der aus dem Triebwerk über die Kolbenstange eingeleiteten energiereichen gleichfrequenten Stoßanteile vorgenommen wird, wodurch dann die die Kariosserie anregenden Stöße weitestgehend getilgt werden.

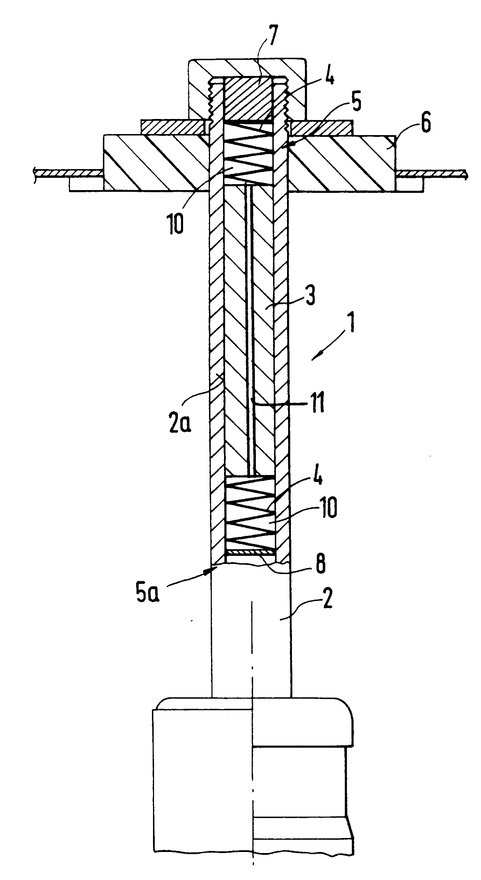

Ein Ausführungsbeispiel der Erfindung ist in der Zeichnung dargestellt und zeigt einen Schnitt durch ein Dämpferbein mit Tilgermasse.

Das Dämpferbein 1 eines Kraftfahrzeugs umfasst eine Kolbenstange 2 mit einem sich längsachsig erstreckenden Hohlraum 2a, in dem eine verschiebbare Tilgermasse 3 zu beiden Enden über Federelemente 4 in Lage gehalten ist. Diese Federelemente 4 können z.B. aus Spiralfedern, Faltenbälgen, Tellerfederpaketen oder Gummifederelementen bestehen. Das freie Ende 5 der Kolbenstange 2 ist in einem elastischen Lager 6 des Fahrzeugaufbaus gehalten, wobei das untere abgekehrte Ende des Abstützbeines 1 an einem nicht gezeigten Radführungselement gelagert ist.

Die Tilgermasse 3 ist über ein Medium, das in den die Federelemente 4 aufnehmenden geschlossenen Freiräumen 10 vorgesehen ist, bedämpft. Dieses Medium kann entweder gasförmig z.B. aus Luft bestehen oder flüssig sein und z.B. aus einem Hydrauliköl oder aus einer elektroviskosen Flüssigkeit bestehen. Mit dieser elektroviskosen Flüssigkeit ist es möglich, durch Anlegen verschiedener elektrischer Spannungen eine gewünschte Schwingungsbandbreite während des Betriebs einzustellen. Eine Steuerung der elektrischen Spannung in Abhängigkeit von Fahrzuständen wäre möglich.

Der Hohlraum 2a wird am freien oberen Ende 5 der Kolbenstange 2 von einem Stopfen 7 abgeschlossen und am abgekehrten unteren Ende 5a von einer Abschlußplatte 8 begrenzt, wobei der Stopfen 7 und die Anschlußplatte 8 axiale Abstützungen für die Federelementen 4 bilden.

In der Tilgermasse 3 ist ein Durchlaß 11, z.B. eine Längsbohrung, vorgesehen, welche die beiden Freiräume 10 zu beiden Enden 5 und 5a der Tilgermasse 3 in der Kolbenstange 2 miteinander verbindet, so daß das Medium gedrosselt von einem Freiraum zum anderen Freiraum fließen kann.

Die Federelemente 4 halten die Tilgermasse 3 in einer Nullage, wobei die Bedämpfung über das Medium im Freiraum 10 erfolgt, so daß eine wirksame Betilgung der Torsionseigenfrequenz des Fahrzeugaufbaus erzielt wird, wobei die Frequenz der Tilgermasse 3 mit der Torsionseigenfrequenz im wesentlichen übereinstimmend ist.

## Patentansprüche

1. Schwingungsdämpfendes Abstützbein (1) für ein Kraftfahrzeug zur Betilgung von Eigenfrequenzen des Fahrzeugaufbaus, das zwischen dem Fahrzeugaufbau und einem Radführungselement angeordnet ist und das Abstützbein (1) eine aufbauseitig in einem elastischen Lager (6) gehaltene Kolbenstange (2) mit einem sich längsachsig erstreckenden Hohlraum (2a) umfasst, in dem eine Tilgermasse (3) axial bewegbar angeordnet ist, die jeweils endseitig über ein in einem Freiraum (10) des Hohlraumes (2a) angeordnetes Federelement (4) abgestützt ist und diese Freiräume (10) eine Mediumfüllung aufweisen und mindestens über einen Durchlaß (11) in der Tilgermasse (3) untereinander verbunden sind, **dadurch gekennzeichnet**, daß die Füllung in jedem Freiraum (10) aus einer elektroviskosen Flüssigkeit besteht, die einer elektrischen Spannung aussetzbar ist und in Abhängigkeit von Parametern des Fahrzeugs ansteuerbar ist.

## Claims

1. A vibration-damping support leg (1) for a motor vehicle to eliminate the characteristic frequencies of the vehicle body, the support leg (1) being arranged between the vehicle body and a wheel-guide member, and the support leg (1) comprises a piston rod (2) held on the body in a resilient bearing (6) and having a cavity (2a) which extends in the direction of the longitudinal axis and in which an axially movable cancelling mass (3) is arranged, the cancelling mass (3) being supported at each end by way of a respective spring member (4) arranged in a free space (10) in the cavity (2a), and the said free spaces (10) having a filling with a medium and being connected to each other by way of an opening (11) in the cancelling mass (3), **characterized in that** the filling in each free space (10) consists of an electroviscose liquid which can be subjected to an electrical voltage and is controllable as a function of parameters of the vehicle.

## Revendications

1. Jambe d'appui (1) amortissant les oscillations d'un véhicule automobile, destinée à amortir les fréquences de résonance de la carrosserie, qui est montée entre la carrosserie et un élément de guidage de roue et la jambe d'appui (1) comporte une tige de piston (2) maintenue côté carrosserie dans un palier (6) élastique avec une cavité (2a) s'étendant dans la direction de l'axe longitudinal, cavité dans laquelle une masse d'amortissement (3) est montée mobile axialement, laquelle est soutenue à chacune de ses extrémités par un élément à ressort (4) monté dans un espace libre de la cavité (2a) et ces espaces libres (10) sont remplis d'un fluide et communiquent entre eux au moins par un passage (11) pratiqué dans la masse d'amortissement (3), caractérisée en ce que le remplissage de chaque espace libre (10) est constitué d'un liquide électrovisqueux qui peut être soumis à une tension électrique et commandé en fonction de paramètres du véhicule.
